# EUROPEAN PATENT SPECIFICATION

(11) **EP 0 584 853 B1**
(45) Date of publication and mention of the grant of the patent: **30.10.1996**
(21) Application number: 93202256.9
(22) Date of filing: 30.07.1993
(51) Int. Cl.: A22C 9/00

(54) **Continuously operating massaging device**
Kontinuierlich bearbeitende massierende Vorrichtung
Dispositif attendrisseur continuellement opératif

(30) Priority: 21.08.1992 NL 9201490
(43) Date of publication of application: 02.03.1994
(73) Proprietor: NEDERLANDSE ORGANISATIE VOOR TOEGEPAST-NATUURWETENSCHAPPELIJK ONDERZOEK TNO, 2501 BD 's-Gravenhage (NL)
(72) Inventor: Logtenberg, Harry, NL-3721 VG Bilthoven (NL)
(74) Representative: Iemenschot, Johannes Andreas, Ir.

(56) References cited:
- CH-A- 571 823
- DE-U- 8 805 657
- GB-A- 1 232 905
- GB-A- 2 085 742
- NL-A- 9 000 664
- US-A- 4 441 231

## Description

The present invention relates to a continuously operating massaging device, suitable in particular for mechanically massaging salted or unsalted meat products, at least comprising a drum with a drum wall and an essentially horizontally directed longitudinal shaft extending between a feed and a discharge side of the drum for the meat products to be massaged, massage elements in the inside of the drum, which form a massage surface, the radial distance of which surface from the longitudinal shaft of the drum increases and decreases alternately, viewed in the peripheral direction of the drum, and drive means for rotating the massage elements about the longitudinal shaft of the drum, guide means being present in the inside of the drum for the meat products to be massaged, which guide means between the feed side and the discharge side of the drum extend helically with a pitch round the longitudinal shaft of the drum inside the massage surface.

Such a massaging device is known from NL-A-9000664 and is used to loosen up the internal structure of a meat product, in particular bacon cuts, by forming capillaries between the meat cells. Through these capillaries, moisture already present and/or added moisture can become better distributed and therefore also better absorbed or retained by the meat product. The meat products to be massaged are usually supplied one by one to the massaging device. In the case of the known device massage elements form a star-shaped massage surface. When the drum is rotated, the meat products slide over the tips of the star-shaped massage surface and over one another, with the result that a massaging effect is obtained. In this case the meat products remain in the bottom part of the drum. A helical plate element with a constant pitch is present in the inside of the drum, for guidance of the meat products from the feed side to the discharge side of the drum. The pitch is in this case adapted to the width measurement of the meat products to be massaged. Guidance of the meat products results in a reduction in the spread of the residence time of the meat products in the massaging device, so that a meat product of high quality can be obtained.

The disadvantage of the known massaging device is that placing the meat products to be massaged in the grooves of the helical plate element at the feed side, preferably at a rate of several meat products per revolution of the drum, gives rise to problems, with the result that the processing capacity and working of the massaging device are adversely affected.

The object of the invention is to eliminate these drawbacks by providing a device of the type described in the preamble, which is characterised in that the pitch in a feed part of the guide means adjoining the feed side is greater than the pitch of a part of the guide means next to it.

In a preferred embodiment, the pitch in the feed part gradually decreases from the feed side towards the discharge side, to the pitch of the part of the guide means next to it. This means that a number of meat products fed in one after the other are easily positioned in the feed part without jamming, and that during the movement through the massaging device they also slide uniformly over one another. Further advantageous embodiments of the device are described in the sub-claims.

The invention will be explained in greater detail below with reference to the drawing of an example of an embodiment of a massaging device according to the invention, in which:
Fig. 1 shows diagrammatically a side view, and
Fig. 2 shows a detail of the device from Fig. 1.

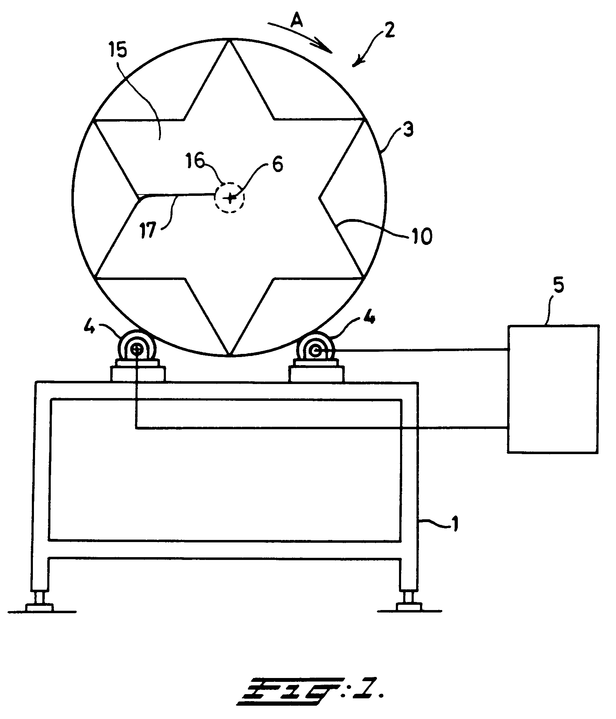

Figure 1 shows diagrammatically a massaging device according to the invention, in a view from the feed side. The massaging device comprises a frame 1, on which a drum 2 is placed. The drum 2 is driven in the direction of arrow A by rollers 4, which are connected to a drive motor 5, acting upon drum wall 3. The drum thus rotates about its longitudinal shaft 6. Inside the drum wall is a massage surface 10, which is formed by a closed wall with a star-shaped cross-section. The massage surface is detachably connected here to the drum wall 3. Guide means, which guide the meat products to be massaged from the feed side to the discharge side, are also provided in the drum 2. Said guide means are formed by a helical plate element 15 which is fixed around a shaft 16. The outer periphery of the plate element 15 corresponds to the star shape of the massage surface 10. The front boundary edge of the helical plate element is indicated by 17. The plate element 15 ensures that on rotation of the drum (and thus of the massage surface) the meat products to be massaged are guided into a channel and are massaged by sliding over the tips of the star-shaped massage surface and over each other. In practice, it is desirable for the plate element 15 with the shaft 16 to be easy removable from the drum, for the purpose of cleaning the massaging device.

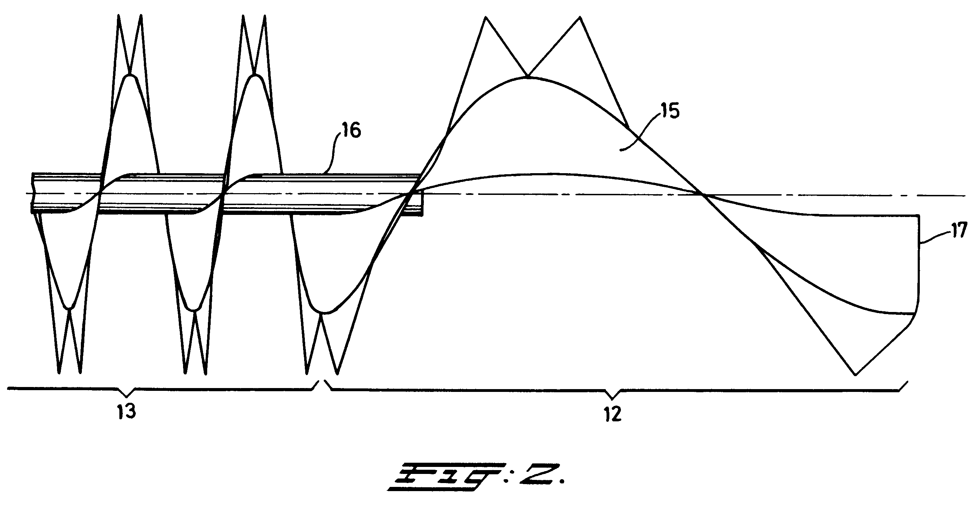

Figure 2 shows in more detail the design of the part of the guide means of the device of Figure 1 adjoining the feed side, comprising the helical plate element 15 and the shaft 16. The helical plate element 15 is made up of a cylindrical helical part welded to the shaft 16, triangular parts being welded around the periphery thereof. It can be seen clearly that the pitch (a) in the feed part 12 adjoining the feed side is greater than the pitch (b) of the part 13 next to it, which extends to the discharge side of the drum. In this case the pitch (b) in the part 13 is constant, with a value which is preferably adapted to the width measurement of the meat product to be massaged. For example, in the preparation of bacon the width of so-called "backs" is usually 0.2 m. The measurement of the pitch (b) in the part 13 is then selected slightly larger than 0.2 m. For "middles", the width of which is generally 0.4 m, the pitch is preferably 0.45 m. It can also be seen clearly that the pitch (a) in the feed part 12 gradually decreases from the feed side towards the discharge side, to the pitch (b) in the part 13 next to it. For example, in the case of a massaging device for "backs" the pitch decreases from 0.9 to 0.2 m. The shaft 16 extends inside the drum only over the part 13 of the guide means. This ensures that when meat products are introduced from the top in the grooves of the plate-shaped element 15 they do not fall onto the shaft 16 and become damaged as a result.

In another embodiment (not shown), the longitudinal shaft of the drum is placed in an inclined position relative to the horizontal. As an alternative, the drum can be conical, and the longitudinal shaft of the drum is placed horizontally. A smooth movement of the meat products through the massaging device is obtained in this way.

The drum can also be closed by an end plate at both the feed and the discharge side, each end plate being provided with an aperture to allow through the meat products. A massaging device which is largely closed relative to the environment is obtained in this way.

A design in which the massage surface and the guide means rotate relative to a stationary drum wall is also possible.

## Claims

1. Continuously operating massaging device, suitable in particular for mechanically massaging salted or unsalted meat products, at least comprising a drum (2) with a drum wall (3) and an essentially horizontally directed longitudinal shaft (6) extending between a feed and a discharge side of the drum for the meat products to be massaged, massage elements (10) in the inside of the drum, which form a massage surface, the radial distance of which surface from the longitudinal shaft (6) of the drum increases and decreases alternately, viewed in the peripheral direction of the drum, and drive means (4, 5) for rotating the massage elements about the longitudinal shaft of the drum, guide means (15, 16) being present in the inside of the drum for the meat products to be massaged, which guide means between the feed side and the discharge side of the drum extend helically with a pitch round the longitudinal shaft of the drum inside the massage surface, **characterised in that** the pitch (a) in a feed part (12) of the guide means (15, 16) adjoining the feed side is greater than the pitch (b) of a part (13) of the guide means next to it.

2. Massaging device according to claim 1, **characterised in that** the pitch (a) in the feed part (12) gradually decreases from the feed side towards the discharge side, to the pitch of the part (13) next to it.

3. Massaging device according to claim 1 or 2, **characterised in that** the massage surface (10) has an essentially star-shaped cross-section.

4. Massaging device according to one of the preceding claims, **characterised in that** the guide means are formed by a helical plate element (15) which is fixed around a central shaft (16), the shaft extending over the part (13) of the plate element connecting to the feed part.

5. Massaging device according to one of the preceding claims 1 - 4, **characterised in that** the drum (2) is cylindrical and the longitudinal shaft (6) of the drum is placed in an inclined position relative to the horizontal.

6. Massaging device according to one of the preceding claims 1 - 4, **characterised in that** the drum is conical, and the longitudinal shaft of the drum is placed horizontally.

7. Massaging device according to one of the preceding claims, **characterized in that** the drum is closed by an end plate at both the feed and the discharge side, each end plate being provided with an aperture to allow through the meat products.

## Patentansprüche

1. Kontinuierlich arbeitende Massiervorrichtung, die sich insbesondere zum mechanischen Massieren von gesalzenen oder ungesalzenen Fleischerzeugnissen eignet und wenigstens eine Trommel (2) mit einer Trommelwand (3) und einer im wesentlichen horizontal gerichteten Längswelle (6) umfaßt, die sich zwischen einer Zuführ- und einer Austrittsseite der Trommel für die zu massierenden Fleischerzeugnissen erstreckt, Massierelemente (10) im Inneren der Trommel, die eine Massierfläche bilden, wobei der radiale Abstand dieser Fläche zu der Längswelle (6) der Trommel, in der Umfangsrichtung der Trommel gesehen, abwechselnd zunimmt und abnimmt, sowie Antriebseinrichtungen (4,5), die die Massierelemente um die Längswelle der Trommel herum drehen, Führungseinrichtungen (15), die im Innern der Trommel für die zu massierenden Fleischerzeugnisse vorhanden sind, wobei die Führungseinrichtung zwischen der Zuführseite und der Austrittsseite der Trommel spiralförmig mit einer Steigung um die Längswelle der Trommel im Innern der Massierfläche verlaufen, **dadurch gekennzeichnet**, daß die Steigung (a) in einem Zuführteil (12) der Führungseinrichtungen (15,16) an die Zuführseite angrenzend größer ist als die Steigung (b) eines Teils (13) der Führungseinrichtungen daneben.

2. Massiervorrichtung nach Anspruch 1, **dadurch gekennzeichnet**, daß die Steigung (a) im Zuführteil (12) von der Zuführseite zur Austrittsseite hin allmählich auf die Steigung des Teils (13) daneben abnimmt.

3. Massiervorrichtung nach Anspruch 1 oder 2, **dadurch gekennzeichnet**, daß die Massierfläche (10) einen im wesentlichen sternförmigen Querschnitt hat.

4. Massiervorrichtung nach einem der vorangehenden Ansprüche, **dadurch gekennzeichnet**, daß die Führungseinrichtungen durch ein spiralförmiges Plattenelement (15) gebildet werden, das um eine Mittelwelle (16) herum befestigt ist, wobei sich die Welle über den Teil (13) des Plattenelementes erstreckt, der mit dem Zuführteil verbunden ist.

5. Massiervorrichtung nach einem der vorangehenden Ansprüche 1 - 4, **dadurch gekennzeichnet**, daß die Trommel (2) zylindrisch ist und die Längswelle (6) der Trommel in einer geneigten Position in bezug auf die Horizontale angeordnet ist.

6. Massiervorrichtung nach einem der vorangehenden Ansprüche 1 - 4, **dadurch gekennzeichnet**, daß die Trommel konisch ist und die Längswelle der Trommel horizontal angeordnet ist.

7. Massiervorrichtung nach einem der vorangehenden Ansprüche, **dadurch gekennzeichnet**, daß die Trommel sowohl an der Zuführ- als auch an der Austrittsseite mit einer Endplatte verschlossen ist, wobei jede Endplatte mit einer Öffnung versehen ist, durch die die Fleischerzeugnisse hindurchgelangen.

## Revendications

1. Dispositif attendrisseur à fonctionnement continu, adapté en particulier pour attendrir mécanique-ment des produits carnés salés ou non salés, comprenant au moins un tambour (2) avec une paroi de tambour (3) et un arbre (6) longitudinal dirigé essentiellement horizontalement s'étendant entre un côté d'alimentation et un côté de décharge du tambour pour les produits carnés à attendrir, des éléments d'attendrissage (10) à l'intérieur du tambour qui forment une surface d'attendrissage, la distance radiale de laquelle surface depuis l'arbre longitudinal (6) du tambour augmente et diminue alternativement, vu dans la direction périphérique du tambour et des moyens d'entraînement (4, 5) pour l'entraînement en rotation des éléments d'attendrissage autour de l'arbre longitudinal du tambour, des moyens de guidage (15, 16) étant présents à l'intérieur du tambour pour les produits carnés à attendrir, lesquels moyens de guidage entre le côté d'alimentation et le côté de décharge du tambour s'étendent de manière hélicoïdale avec un pas autour de l'arbre longitudinal du tambour à l'intérieur de la surface d'attendrissage, caractérisé en ce que le pas (a) dans une partie d'alimentation (12) des moyens de guidage (15, 16) adjacents au côté d'alimentation est plus grand que le pas (b) d'une partie (13) des moyens de guidage suivant celle-ci.

2. Dispositif attendrisseur selon la revendication 1, caractérisé en ce que le pas (a) dans la partie d'alimentation (12) diminue progressivement depuis le côté d'alimentation vers le côté de décharge vers le pas de la partie (13) suivant celle-ci.

3. Dispositif attendrisseur selon la revendication 1 ou 2, caractérisé en ce que la surface d'attendrissage (10) a une section transversale essentiellement en forme d'étoile.

4. Dispositif attendrisseur selon l'une quelconque des revendications précédentes, caractérisé en ce que les moyens de guidage sont formés par un organe (15) en plateau hélicoïdal qui est fixé autour d'un arbre central (16), l'arbre s'étendant sur la partie (13) de l'organe en plateau reliant la partie d'alimentation.

5. Dispositif attendrisseur selon l'une des revendications 1 à 4 précédentes, caractérisé en ce que le tambour (2) est cylindrique et l'arbre longitudinal (6) du tambour est placé dans une position inclinée par rapport à l'horizontale.

6. Dispositif attendrisseur selon l'une quelconque des revendications 1 à 4 précédentes, caractérisé en ce que le tambour est conique, et l'arbre longitudinal du tambour est placé horizontalement.

7. Dispositif attendrisseur selon l'une quelconque des revendications précédentes, caractérisé en ce que le tambour est fermé par une plaque d'extrémité à la fois du côté d'alimentation et du côté de décharge, chaque plaque d'extrémité étant munie d'une ouverture pour permettre de jeter les produits carnés.
